# EUROPEAN PATENT SPECIFICATION

(11) **EP 2 257 118 B1**
(45) Date of publication and mention of the grant of the patent: **24.12.2014**
(21) Application number: 10163736.1
(22) Date of filing: 25.05.2010
(51) Int. Cl.: H05B 1/02, A47J 31/54

(54) **A control circuit for the self shutoff of an automatic machine particularly for the production of coffee**
Steuerschaltkreis zur Selbstausschaltung einer automatischen Maschine, insbesondere zur Herstellung von Kaffee
Circuit de commande pour arrêt automatique d'une machine automatique, particulièrement pour la production de café

(30) Priority: 25.05.2009 IT MI20090920
(43) Date of publication of application: 01.12.2010
(73) Proprietor: De'Longhi Appliances S.r.l., 31100 Treviso (IT)
(72) Inventor: De' Longhi, Giuseppe, 31100 Treviso (IT)
(74) Representative: Rapisardi, Mariacristina

(56) References cited:
- EP-A1- 1 854 386
- DE-A1- 2 635 848
- DE-A1- 2 704 146
- DE-A1- 4 445 207
- US-A- 5 001 969

## Description

The present invention refers to a control circuit for the self shutoff of an automatic machine particularly for the production of a coffee-based beverage.

In the control circuits of the traditional automatic coffee machines, the shutoff function can be automatically actuated by means of an appropriate controller ("functional block") and also manually by means of the power switch, associated to the general switch of the machine ("master switching element").

One of the main drawbacks relating to the manual shutoff function consists in that, each power switch occupies a not irrelevant volume, and in any case this limits the choice of the possible installation regions on the machine.

The functional blocks implementing the first and second power switches of the machine are therefore necessarily put together.

DE 26 35848, DE 2704146, DE 4445207, EP 1 854 386 and US 5 001 969 disclose a control circuit for the self shutoff of an automatic machine according to the preamble of claim 1.

The technical aim of the present invention is therefore to realize a control circuit for the self shutoff particularly of an automatic coffee machine, which permits to eliminate the technical drawbacks lamented in the known art.

Within such technical aim, a scope of the invention is to realize a control circuit for the self shutoff particularly of an automatic coffee machine, which permits a greater flexibility of choice of the regions for placing on the machine the functional blocks which implement the function of automatic and manual shutoff.

Another scope of the invention is to realize a control circuit for the self shutoff particularly of an automatic coffee machine, which function is simple and reliable.

Not a least scope of the invention is to realize a method of on/off actuation of a coffee machine, which is particularly efficient and sensible to the energy consumption.

The technical aim, and also these and other aims, are reached according to the present invention by realizing a control circuit for the self shutoff of an automatic machine particularly for coffee, according to claim 1.

The provision of a signal switch in the place of a power switch for the function of self shutoff is certainly advantageous due to the fact that the signal switch can be miniaturized with respect to a power switch.

Furthermore, in this way, the general power switch can be disengaged also spatially from the signal switch and remotized inside the machine.

The signal switch can instead be advantageously positioned at the interface with the user, for example on the dashboard of said machine, where also the other selection buttons are present, which normally are signal buttons and not power buttons. Other characteristics of the present invention are also defined in the following claims.

Other characteristics and advantages of the invention will result more evident from the description a preferred but non exclusive embodiments of the control circuit of the self shutoff of an automatic coffee machine according to the finding, shown in an indicative and non-limitative way in the annexed drawing, in which:
figure 1 shows schematically a control circuit of the self shutoff of an automatic coffee machine according to a first preferred way of realization of the invention; and
figure 2 shows schematically a control circuit of the self shutoff of an automatic coffee machine according to a second preferred way of realization of the invention.

With reference to the cited figures, a control circuit is shown, particularly but not necessarily for the self shutoff of an automatic coffee machine.

The control circuit comprises a power line having a general power switch 1 (in jargon "Master Switching Element") for the on/off actuation of the coffee machine.

The power line has phases L1, L2 having inlet terminals indicated with L1in, L2in and outlet terminals indicated with L1out, L2out.

The control circuit also comprises a controller 2 (in jargon "Functional Block") having in memory the inner functioning logic of the machine.

The controller 2 is able to drive the general power switch 1, preferably through an electromagnetic relay 6 or through a "solid state" circuit.

The controller 2, referring to the memorized information with reference to the functioning logic of the machine is able to commute the general power switch 1 also for the automatic shutoff of the machine by reaching a predetermined state of this, for instance by reaching a predetermined inactivity time of this.

In cascade with the general power switch 1 a first signal generator 3 is present (in jargon "Master Power Supply") communicating with the controller 2 for sending a first control signal VM of the general power switch 1.

According to a particularly advantageous aspect of the invention, the control circuit comprises, in cascade with a signal switch 4 (in jargon "Recovery Switching Element") having a button for its own commutation, a second switch generator 5 (in jargon "Recovery Power Supply") communicating with the controller 2 for sending a second control signal VR of the general power switch 1.

The controller 2 assumes preferably the shape of an electronic card, which as stated, is able to drive the general power switch 1 in function both of the inner functioning logic of the machine and of the control signals VR and VM received, which in particular are voltage signals.

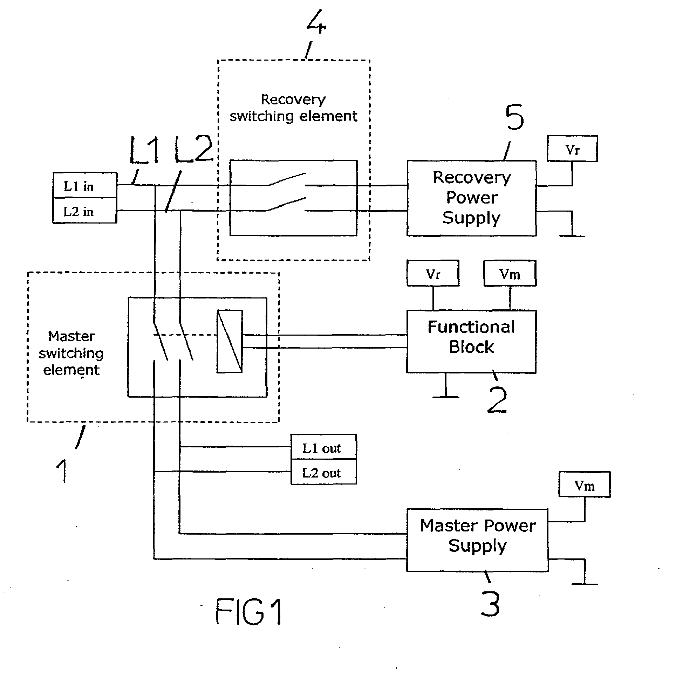

In the preferred realization of Figure 1, the second signal generator 5 is supplied by the power line L1, L2.

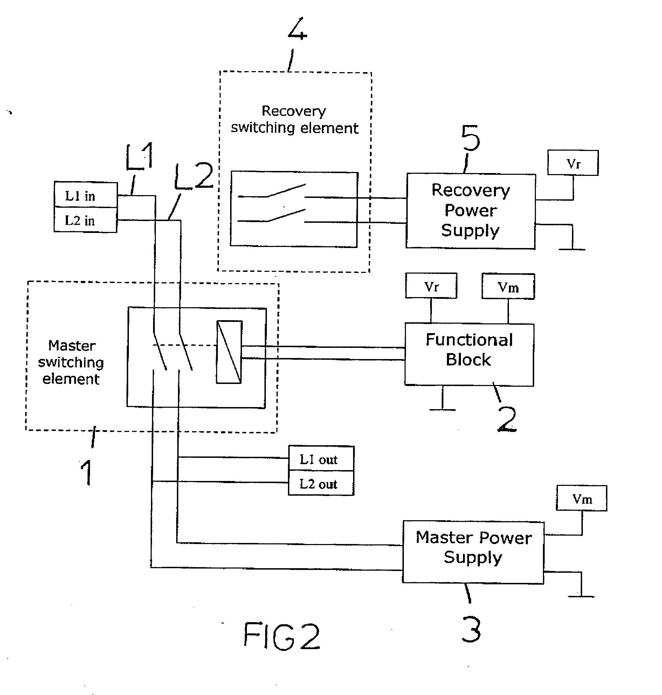

In the preferred realization in Figure 2 the second signal generator 5 is instead supplied by dedicated independent electric source, for instance a piezoelectric element able to convert in electric energy the pressure of the commutation button of the signal switch 4.

As said, the signal switch 4 can be advantageously placed on the machine, in a remote position, by the general power switch 1. Therefore, preferably the signal switch 4 can be placed on the dashboard of the machine, at the interface section with the user where the other selection buttons of the machine are present.

The method for on/off actuation of the machine is briefly the following.

The machine can be automatically switched off when the controller 2, having verified through an appropriate inner counter the inactivity of the machine for a predetermined time, sends to the relay 6 a control commutation signal of the general power switch 1.

Let us now examine also the different of manual on/off actuation method of the machine with the control circuit of the invention.

For the on actuation of the machine, the button of the signal generator 4 is lowered, which in turn actuates the second signal generator 5, which in turn sends the control signal VR to the controller 2.

The controller 2, in response to the inlet control signal VR generates at the outlet an actuation signal of the relay 6, for the commutation of the general power switch 1.

Once having commuted the general power switch 1, the machine receives the supply and in particular also the first signal generator 3 receives the supply, which so can send the control signal VR to the controller 2.

The controller 2, until it receives at the inlet the control signal VM does not control the modification of the commutation state achieved by the general power switch 1, also after the ceasing the control signal VR following the release of the button of the signal switch 4.

For the manual shutoff of the machine, the button of the signal generator 4 is lowered again, which in turn actuates again the second signal generator 5, which in turn sends again the control signal VR to the controller 2.

The controller 2, in response to the inlet control signal VR, generates at the outlet, a control signal of the relay 6, for the commutation of the general power switch 1 which determines the resetting of the power absorption of the machine.

The control circuit so conceived is susceptible of many modifications and variations, all comprised within the field of the concept of the invention; according to a first preferred way of realization of the invention; furthermore all the details are can be substituted with technically equivalent elements.

In practice, the used materials, and also the dimensions will be of any kind, according to the needs and to the state of the art.

## Claims

1. A control circuit for the self switch-off of an automatic machine particularly for the production of coffee, comprising a power line (L1, L2) having a general power switch (1) for the on/off actuation of said coffee machine, a controller (2), in cascade with said general power switch (1), a first signal generator (3) communicating with said controller (2) for sending a first control signal (Vm) of said general power switch (1), comprising, in cascade with a signal switch (4) having a button for its own commutation, a second signal generator (5) communicating with said controller (2) for sending a second control signal (Vr) of said general power switch (1),
**characterised in that** said signal switch (4) is present on the dashboard of said machine at the interface section with the user where the other selection buttons are present for the selection of said machine, in a position remote from said general power switch (1).

2. The control circuit for the self switch-off of an automatic coffee machine according to claim 1, **characterized in that** said controller (2) has in a memory the internal logic for the functioning of said machine and is able to pilot said general power switch (1) for the automatic switch-off of said machine at reaching a predetermined condition of said machine.

3. The control circuit for the self switch-off of an automatic coffee machine according to one or more preceding claims, **characterized in that** said controller (2) is an electronic card.

4. The control circuit for the self switch-off of an automatic coffee machine according to one or more preceding claims, **characterized in that** said controller (2) pilots said general power switch (1) by means of an electromagnetic relay (6) or by means of a solid state" circuit.

5. The control circuit for the self switch-off of an automatic coffee machine according to one or more preceding claims, **characterized in that** said second signal generator (5) is powered by said power line (L1, L2).

6. The control circuit for the self switch-off of an automatic coffee machine according to one or more preceding claims, **characterized in that** said second signal generator (5) is powered by a dedicated independent electric source separated from said power line (L1, L2).

7. The control circuit for the self switch-of of an automatic coffee machine according to one or more preceding claim, **characterized in that** said independent electrical source is a piezoelectric element able to convert in electric energy the pressure of said button to commutate said signal switch (4).

8. Method for the on/off actuation of a coffee machine with a control circuit according to one or more preceding claims, **characterized in that** for the switch-on of said machine said button of said signal switch (4) is pushed which in turn actuates said second signal generator (5) which in turn sends said second signal (Vr) to said controller (2) which in turn commutates said general power switch (1) so that said first signal generator (3) is powered for sending said first signal (Vm) to said controller (2) in order to maintain the state of commutation reached by said general power switch (1) also after ceasing said second signal (vr) following the release of said button of said signal switch (4).

9. Method for the on/off actuation of a coffee machine according to preceding claim, **characterized in that** for the switch-off of said machine said button of said signal switch (4) is pushed which in turn actuates said second signal generator (5) which in turn sends said second signal (Vr) to said controller (2) which in turn commatates said general power switch (1).

10. Method for the on/off actuation of a coffee machine according to one or more preceding claims, **characterized in that** said predetermined state of said machine comprises an inactivity time of said machine.

## Patentansprüche

1. Steuerschaltkreis zur Selbstausschaltung einer automatischen Maschine, insbesondere zur Herstellung von Kaffee, umfassend eine Stromleitung (L1, L2), aufweisend einen Hauptschalter (1) für die Ein-/Ausschaltung der Kaffeemaschine, ein Steuergerät (2) in Kaskadenschaltung mit dem Hauptschalter (1), einen ersten Signalgenerator (3), der mit dem Steuergerät (2) kommuniziert, um ein erstes Steuersignal (Vm) des Hauptschalters (1) zu übermitteln, umfassend in Kaskadenschaltung mit einem Signalschalter (4), aufweisend eine Taste für dessen eigene Umschaltung, einen zweiten Signalgenerator (5), der mit dem Steuergerät (2) kommuniziert, um ein zweites Steuersignal (Vr) des Hauptschalters (1) zu übermitteln,
**dadurch gekennzeichnet, dass** der Signalschalter (4) auf der Instrumententafel der Maschine am Schnittstellenbereich mit dem Benutzer vorhanden ist, wo die anderen Auswahltasten für die Auswahl der Maschine verfügbar sind, in einer vom Hauptschalter (1) entfernten Position.

2. Steuerschaltkreis zur Selbstausschaltung einer automatischen Kaffeemaschine nach Anspruch 1, **dadurch gekennzeichnet, dass** das Steuergerät (2) in einem Speicher die interne Schaltung für den Betrieb der Maschine aufweist und in der Lage ist, den Hauptschalter (1) für die automatische Ausschaltung der Maschine zu steuern, wenn ein vorgegebener Zustand der Maschine erreicht wird.

3. Steuerschaltkreis zur Selbstausschaltung einer automatischen Kaffeemaschine nach einem oder mehreren der vorhergehenden Ansprüche, **dadurch gekennzeichnet, dass** es sich beim Steuergerät (2) um eine Elektronikkarte handelt.

4. Steuerschaltkreis zur Selbstausschaltung einer automatischen Kaffeemaschine nach einem oder mehreren der vorhergehenden Ansprüche, **dadurch gekennzeichnet, dass** das Steuergerät (2) den Hauptschalter (1) mittels eines elektromagnetischen Relais (6) oder mittels eines Festkörperschaltkreises steuert.

5. Steuerschaltkreis zur Selbstausschaltung einer automatischen Kaffeemaschine nach einem oder mehreren der vorhergehenden Ansprüche, **dadurch gekennzeichnet, dass** der zweite Signalgenerator (5) über die Stromleitung (L1, L2) gespeist wird.

6. Steuerschaltkreis zur Selbstausschaltung einer automatischen Kaffeemaschine nach einem oder mehreren der vorhergehenden Ansprüche, **dadurch gekennzeichnet, dass** der zweite Signalgenerator (5) über eine entsprechende unabhängige elektrische Quelle gespeist wird, die von der Stromleitung (L1, L2) getrennt ist.

7. Steuerschaltkreis zur Selbstausschaltung einer automatischen Kaffeemaschine nach einem oder mehreren der vorhergehenden Ansprüche, **dadurch gekennzeichnet, dass** es sich bei der unabhängigen elektrischen Quelle um ein piezoelektrisches Element handelt, das in der Lage ist, den Druck der Taste in elektrische Energie umzuwandeln, um den Signalschalter (4) umzuschalten.

8. Verfahren zum Ein-/Ausschalten einer Kaffeemaschine mit einem Steuerschaltkreis nach einem oder mehreren der vorhergehenden Ansprüche, **dadurch gekennzeichnet, dass** zum Einschalten der Maschine die Taste des Signalschalters (4) gedrückt wird, der wiederum den zweiten Signalgenerator (5) betätigt, der wiederum das zweite Signal (Vr) an das Steuergerät (2) übermittelt, das wiederum den Hauptschalter (1) umschaltet, sodass der erste Signalgenerator (3) gespeist wird, um das erste Signal (Vm) an das Steuergerät (2) zu übermitteln und den Kommunikationsstatus, der durch den Hauptschalter (1) erreicht wurde, aufrechtzuerhalten, auch nachdem das zweite Signal (Vr) nach dem Loslassen der Taste des Signalschalters (4) beendet wurde.

9. Verfahren zum Ein-/Ausschalten einer Kaffeemaschine nach einem oder mehreren der vorhergehenden Ansprüche, **dadurch gekennzeichnet, dass** zum Ausschalten der Maschine die Taste des Signalschalters (4) gedrückt wird, der wiederum den zweiten Signalgenerator (5) betätigt, der wiederum das zweite Signal (Vr) an das Steuergerät (2) übermittelt, das wiederum den Hauptschalter (1) umschaltet.

10. Verfahren zum Ein-/Ausschalten einer Kaffeemaschine nach einem oder mehreren der vorhergehenden Ansprüche, **dadurch gekennzeichnet, dass** der vorgegebene Zustand der Maschine eine Untätigkeitszeit der Maschine umfasst.

## Revendications

1. Circuit de commande pour arrêt automatique d'une machine automatique, particulièrement pour la production de café, comprenant une ligne électrique (L1, L2) disposant d'un interrupteur général (1) pour la mise en marche ou l'arrêt de ladite machine à café, un dispositif de commande (2) placé en série avec ledit interrupteur général (1), un premier générateur de signaux (3) communiquant avec ledit dispositif de commande (2) pour envoyer un premier signal de commande (Vm) dudit interrupteur général (1), comprenant, en série avec un commutateur (4) disposant d'un bouton pour sa propre commutation, un second générateur de signaux (5) communiquant avec ledit dispositif de commande (2) afin d'envoyer un second signal de commande (Vr) dudit interrupteur général (1),
**caractérisée en ce que** ledit commutateur (4) est présent sur le tableau de bord de ladite machine au niveau de la section d'interface avec l'utilisateur où les autres boutons de sélection sont présents pour la sélection de ladite machine, dans une position à distance dudit interrupteur général (1).

2. Circuit de commande pour arrêt automatique d'une machine à café automatique selon la revendication 1, **caractérisé en ce que** ledit dispositif de commande (2) possède dans une mémoire la logique interne destinée au fonctionnement de ladite machine et est en mesure de piloter ledit interrupteur général (1) pour l'arrêt automatique de ladite machine lorsqu'une condition prédéterminée a été atteinte par ladite machine.

3. Circuit de commande pour arrêt automatique d'une machine à café automatique selon l'une ou plusieurs des revendications précédentes, **caractérisé en ce que** ledit dispositif de commande (2) est une carte électronique.

4. Circuit de commande pour arrêt automatique d'une machine à café automatique selon l'une ou plusieurs des revendications précédentes, **caractérisé en ce que** ledit dispositif de commande (2) pilote ledit interrupteur général (1) au moyen d'un relais électromagnétique (6) ou au moyen d'un circuit à semi-conducteur.

5. Circuit de commande pour arrêt automatique d'une machine à café automatique selon l'une ou plusieurs des revendications précédentes, **caractérisé en ce que** ledit second générateur de signaux (5) est alimenté par ladite ligne électrique (L1, L2).

6. Circuit de commande pour arrêt automatique d'une machine à café automatique selon l'une ou plusieurs des revendications précédentes, **caractérisé en ce que** ledit second générateur de signaux (5) est alimenté par une source électrique indépendante spécialisée séparée de ladite ligne électrique (L1, L2).

7. Circuit de commande pour arrêt automatique d'une machine à café automatique selon l'une ou plusieurs des revendications précédentes, **caractérisé en ce que** ladite source électrique indépendante est un élément piézoélectrique apte à convertir en énergie électrique la pression dudit bouton pour commuter ledit commutateur (4).

8. Procédé de mise en marche ou d'arrêt d'une machine à café avec un circuit de commande selon l'une ou plusieurs des revendications précédentes, **caractérisé en ce que** pour la mise en marche de ladite machine, ledit bouton dudit commutateur (4) est poussé, celui-ci actionnant à son tour ledit second générateur de signaux (5) qui à son tour envoie ledit second signal (Vr) au dit dispositif de commande (2) qui à son tour commute ledit interrupteur général (1) de sorte que le premier générateur de signaux (3) soit alimenté pour envoyer ledit premier signal (Vm) au dit dispositif de commande (2) afin de maintenir l'état de communication atteint par ledit interrupteur général (1) aussi après l'interruption dudit second signal (Vr) après le relâchement dudit bouton dudit commutateur (4).

9. Procédé de mise en marche ou d'arrêt d'une machine à café selon la revendication précédente, **caractérisé en ce que** pour l'arrêt de ladite machine, ledit bouton dudit commutateur (4) est poussé, celui-ci actionnant à son tour ledit second générateur de signaux (5) qui à son tour envoie ledit second signal (Vr) au dit dispositif de commande (2) qui à son tour commute ledit interrupteur général (1).

10. Procédé de mise en marche ou d'arrêt d'une machine à café selon l'une ou plusieurs des revendications précédentes, **caractérisé en ce que** ledit état prédéterminé de ladite machine comprend un temps d'inactivité de ladite machine.
